# EUROPÄISCHE PATENTSCHRIFT

(11) **EP 1 541 454 B1**
(45) Veröffentlichungstag und Bekanntmachung des Hinweises auf die Patenterteilung: **10.05.2006**
(21) Anmeldenummer: 04027029.0
(22) Anmeldetag: 13.11.2004
(51) Int. Cl.: B62D 53/06, B62D 53/08, B62D 21/20

(54) **Sattelanhängeranordnung, insbesondere Kippsattelanhängeranordnung**
Semi-trailer arrangement, especially for tipping semi-trailer
Ensemble semi-remorque, en particulier pour semi-remorque basculante

(30) Priorität: 10.12.2003 DE 10358152
(43) Veröffentlichungstag der Anmeldung: 15.06.2005
(73) Patentinhaber: Schmitz Gotha Fahrzeugwerke GmbH, 99867 Gotha (DE)
(72) Erfinder: Koch, Josef, 89081 Ulm (DE)
(74) Vertreter: Weber, Gerhard

(56) Entgegenhaltungen:
- EP-A- 0 528 143
- DE-A1- 3 741 277
- US-A- 5 421 613

## Beschreibung

Die Erfindung betrifft eine Sattelanhängeranordnung, insbesondere eine Kippsattelanhängeranordnung, der im Oberbegriff des Anspruchs 1 genannten Art. Eine derartige Sattelanhängeranordnung ist zum Beispiel aus der US 5421613 bekannt.

Sattelanhänger weisen in einem Frontbereich ihres Fahrgestellrahmens einen anhängerseitigen Teil einer Sattelkupplung, insbesondere mit einem vertikalen Sattelzugzapfen, dem sogenannten Königszapfen (king pin) und einer Gegenfläche, welche im angekuppelten Zustand auf der Gleitfläche einer Sattelkupplungsplatte des zugfahrzeugseitigen Teils der Sattelkupplung aufliegt. Eine derartige Sattelkupplung ist beispielsweise in der DE 198 14 276 A1 oder der EP 0 845 406 B1 beschrieben.

Der Fahrgestellrahmen besteht in üblicher Bauart im wesentlichen aus zwei parallel verlaufenden Längsträgern, welche über mehrere Querträger verbunden sind und im Frontbereich eine Tragstruktur mit der Gegenfläche und dem Königszapfen aufnehmen. Ein derartiger Fahrgestellrahmen einer Sattelanhängeranordnung ist beispielsweise in der CH 419 856, beschrieben. Die Konstruktionen mit der kraftaufnehmenden Gegenfläche um den Königszapfen sind dabei in der Regel insbesondere durch Längs- und Querträger-Konstruktionen und/oder durch eine dicke zwischen den Querträgern durchgehende massive Sattelplatte aufwendig und/oder schwer.

Sattelfahrgestelle für Containertransport weisen vorteilhafterweise einen großen seitlichen Abstand der Längsträger auf, um die Querträger mit den außenliegenden Verriegelungen für Containerbeschläge stabil abzustützen. Die als Gooseneck-Trailer bezeichneten Sonderformen von Container-Sattelfahrgestellen sind an sogenannte High-Cube (HC)-Container mit einem frontseitigen Tunnel im Containerboden angepasst, indem der Fahrgestellrahmen am Übergang zum Tunnel einen Höhen- und einen Breitenversatz gegenüber dem Heck aufweist und mit einem schmaleren und höheren Frontbereich in dem Tunnel einliegt. Bei Kippsattelanhängern ist ein großer seitlicher Abstand der Längsträger im Bereich der Achsen von wesentlicher Bedeutung für die Stabilität beim Kippvorgang.

Die US 6 471 233 B1 beschreibt die Umrüstung eines Müllfahrzeug-Behälters in einen Semi-Trailer durch Anbringen einer Königszapfen-Anordnung und eines Fahrwerkrahmens an einem Grundrahmen des Behälters. Die US 4 969 690 zeigt die Montage einer Kippmuldenanordnung ohne eigenes Fahrwerk auf einem Sattelzugfahrzeug mittels eines Hilfsrahmens.

Bei einer aus der DE 37 41 277 A1 bekannten Sattelkupplung ist die zugfahrzeugseitige Platte gewölbt, so dass in Normalstellung nur eine kleine Auflagefläche in geringem Abstand gegeben ist und die Kupplungsteile nicht gegen seitliches Verkippen abgestützt sind. Erst bei eingetretener Verkippung kommen seitlich außen liegende Bereiche der Sattelplatte und der Tragplatte in Berührung. Die Sattelplatte mit dem Königszapfen kann um eine in Längsrichtung liegende Achse kippbar im Frontbereich des Chassis gelagert sein.

In der US 5 421 613 ist ein Sattelanhänger beschrieben, bei welchem gerade Hauptlängsträger einen nach vorne verjüngt zulaufenden trapezförmigen Rahmen bilden, welcher im übrigen in gebräuchlicher Weise im Heckbereich mehrere Radachsen und im Frontbereich eine konventionelle Königszapfen-Anordnung aufnimmt. Durch die kontinuierliche Änderung des Längsträgerabstands sind besondere Achsanordnungen nötig. Durch Beschränkung auf Einzelreifen kann das Gewicht gegenüber doppelbereiften Fahrgestellen vermindert werden.

Aus der EP 0 528 143 A1 ist ein Sattelanhänger bekannt, bei welchem die Hauptlängsträger des Chassis in typischer Weise als Doppel-T-Träger ausgebildet sind, deren Vertikalstege in einem Vorderteil, in welchem der Königszapfen angeordnet ist, parallel zueinander verlaufen und in einem Mittelteil zu einem hinteren Chassisabschnitt hin auseinanderlaufen, wobei durch besondere Gestaltung der Ober- und Untergurte der Längsträger und der innerhalb der Gurtkonturen asymmetrische Verlauf der Vertikalstege eine Anpassung der Querabschnitte an die Belastungssituation begünstigen und eine Gewichtsverringerung des Vorderteils des Chassis ermöglichen. In diesem Dokument ist auch eine typische Ausführung der den Königszapfen tragenden und auf der zugfahrzeugseitigen Sattelkupplungsplatte aufliegenden Tragplatte als durch - Querträger ausgesteiftes Blech dargestellt, welches seitlich bis unter die Untergurte der Längsträger reicht und dort mit diesen verschweißt ist. Die Vertikalstege liegen weiter außen als die Seitenkanten der Tragplatte. Ein Sattelanhänger mit einem derart verschmälerten Vorderteil ist auch aus der EP 0 528 144 A1 bekannt.

Der vorliegenden Erfindung liegt die Aufgabe zugrunde, eine vorteilhafte Sattelanhängeranordnung mit im Frontbereich bei dem Königszapfen geringerem Abstand der Vertikalstege der Längsträger als im hinteren Bereich der Radachsen, insbesondere eine für die Kippsattelanordnung besonderen Belastungen einer Kippsattelanordnung vorteilhafte Sattelanhängeranordnung anzugeben.

Die Erfindung ist im Patentanspruch 1 beschrieben. Die abhängigen Ansprüche enthalten vorteilhafte Ausgestaltungen und Weiterbildungen.

Die Erfindung verbindet die Vorteile eines sicheren Standes des Anhängers durch eine breite Basis im Heckbereich des Anhängerchassis mit einer gewichtsparenden und auflagestabilen Gestaltung im Frontbereich bei der Sattelkupplung.

Die Haupt-Längsträger des Anhängerchassis gehen einstückig vom Frontbereich zum Heckbereich durch und sind typischerweise als Schweißkonstruktionen aus einem Obergurt, einem Untergurt und einem diese verbindenden vertikalen Steg ausgeführt, welche, zumindest in ihrem überwiegenden Verlauf, z. B. ein seitlich offenes C-Profil, vorzugsweise aber ein Doppel-T-Profil der Haupt-Längsträger bilden. An den Haupt-Längsträgem ist im Heckbereich ein Fahrwerk mit typischerweise mehreren Radachsen und im Frontbereich der anhängerseitige Teil der Sattelkupplung befestigt. Die Haupt-Längsträger sind durch mehrere Querträger miteinander verbunden. Wenngleich das Chassis neben den Haupt-Längsträgem weitere in Längsrichtung des Anhängers verlaufende Träger enthalten kann, seien im folgenden solche nicht weiter betrachtet und die Haupt-Längsträger auch einfach als Längsträger bezeichnet. Der Obergurt verläuft vorteilhafterweise in einer im wesentlichen horizontalen Ebene.

Der seitliche Abstand der vertikalen Stege der Längsträger sei im folgenden auch einfach als Abstand der Längsträger bezeichnet. Gebräuchlich ist auch die Bezeichnung als Längsträgerspur. Der Heckbereich umfasse in Längsrichtung des Anhängers zumindest den Abschnitt des mehrachsigen Fahrwerkes. Der Heckbereich umfasst bei einem bevorzugten Ausführungsbeispiel, insbesondere bei einem Kippsattelanhänger wenigstens 40 % der Länge des Chassis. Der Abstand der Längsträger ist vorzugsweise über den Heckbereich in Längsrichtung im wesentlichen konstant. Am hinteren Ende der Längsträger ist in der bevorzugten Ausführung als Kippsattelanhängeranordnung eine senkrecht zur Längsrichtung verlaufende horizontale Kippachse befestigt.

Die den Königszapfen tragende Tragplatte kann zwischen den Untergurten der beabstandeten Längsträger in etwa gleicher Höhe mit diesen liegen und kann auch mit den Untergurten verschweißt sein.

Die seitliche Ausdehnung der Tragplatte bis unter die Vertikalstege der Längsträger und deren Einsatz anstelle der üblichen bandförmigen Untergurte unter Verzicht auf die gesonderten Untergurte in dem Längsabschnitt der Tragplatte reduziert das Gewicht gegenüber der gebräuchlichen zweilagigen Ausführung mit an die Unterseite der Untergurte angeschweißter Tragplatte und vermeidet auch die sonst häufige Korrosion entlang der Berührungsflächen und Schweißnähten. Die Vertikalstege der Längsträger sind direkt mit der Tragplatte verschweißt. In Längsrichtung hinter der die Untergurte in einem vorderen Längsabschnitt ersetzenden Tragplatte schließen sich mit deren Hinterkante direkt oder über Zwischenelemente verschweißt wieder die gebräuchlichen Untergurte an. Die Tragplatte reicht in vorteilhafter Ausführung bis zu den Vorderkanten der Längsträger. Bei längeren Chassisvorderteilen mit nach vorne weiter über die Position des Königszapfens hinausragenden Längsträgern können auch nach vorne noch Untergurtabschnitte einstückig oder angeschweißt an die Tragplatte anschließen. Das Chassisvorderteil kann vorteilhafterweise mit Tragplatte, Vertikalstegabschnitten und Obergurtabschnitte als separtes Teil, insbesondere als Schweißkonstruktionsmodul gefertigt und mit weiter nach hinten führenden Längsträgerabschnitten verschweißt werden.

Besondere Vorteile ergeben sich durch den gegenüber dem Heckbereich verringerten Abstand der Längsträger im Frontbereich und daraus im Frontbereich resultierende Änderungen des anhängerseitigen Teils der Sattelkupplung, bei welcher insbesondere die schwere Aufliegerplatte zwischen den Längsträgern im Frontbereich konventioneller Kupplungsanordnungen, welche als ebene Gegenfläche gegen eine gleichfalls ebene Gleitfläche der zugfahrzeugseitigen Sattelkupplungsplatte zur Übertragung der vertikalen Abstützungskräfte dient, entfallen kann. Eine den Königszapfen umgebende Tragplatte kann mit wesentlich geringerer Dicke bzw. weniger Queraussteifungen ausgeführt werden als bei herkömmlichen Konstruktionen, da das Auflagegewicht des Sattelanhängers nicht von den Längsträgern seitlich über die Tragplatte zur Fahrgestellmitte hin auf die zugfahrzeugseitige Sattelkupplungsplatte geleitet ist, sondern von den Vertikalstegen der Längsträger ohne seitliche Umleitung direkt nach unten in die Sattelkupplungsplatte eingeleitet wird.

Durch die Lage der Stege der Längsträger über der Gleitfläche, was bei nicht kreisrunder Gleitfläche zumindest für Geradeausfahrstellung von Zugfahrzeug und Sattelanhänger sowie für im Straßenfahrbetrieb kaum überschrittene Knickwinkel bis 30° zwischen Längsachsen von Zugfahrzeug und Anhänger gelten soll und die Abstützung der Längsträger auf der Gleitfläche können solche vertikalen Kräfte unmittelbar vertikal in den Stegbereich der Längsträger eingeleitet werden, wodurch insbesondere auch bei Schrägstand oder Schlingern des Anhängers einseitig erhöhte Kräfte sicher abgefangen werden. Vorzugsweise bilden die Unterseiten der Untergurte der Längsträger selbst, die ebene Gegenfläche zu der ebenen Gleitfläche der zugfahrzeugseitigen Sattelkupplungsplatte.

Die Verringerung des seitlichen Abstands der Vertikalstege der Querträger bis über die Gleitfläche der Sattelkupplungsplatte einerseits und der abschnittsweise Ersatz der Untergurte der Längsträger durch die bis unter die Vertikalstege der Längsträger reichende Tragplatte können jeweils für sich, vorzugsweise aber gemeinsam realisiert sein. Soweit im folgenden die Untergurte der Längsträger im Bereich der Tragplatte behandelt sind, sollen dabei als Untergurte auch die deren Funktion erfüllenden seitlichen Randabschnitte einer unter den Vertikalstegen verlaufenden Tragplatte verstanden sein, wenn sich aus dem Zusammenhang nichts anderes ergibt. Vorzugsweise liegen die seitlichen Außenkanten einer bis unter die Vertikalstege der Längsträger reichenden und dort die Untergurte ersetzenden und mit den Vertikalstegen verschweißten Tragplatte außerhalb der Gleitfläche der zugfahrzeugseitigen Sattelkupplungsplatte.

Bei größeren Knickwinkeln zwischen Längsachsen von Zugfahrzeug und Anhänger, wie sie typischerweise beim Rangieren mit niedriger Geschwindigkeit auftreten, verläuft vorteilhafterweise zumindest ein zwischen den Längsträgern verlaufender und die Längsträger im Frontbereich verbindender Querträger über der Gleitfläche der Sattelkupplungsplatte und liegt mit seinem Untergurt auf der Gleitfläche auf. Der Abstand des Querträgers vom Königszapfen in Längsrichtung ist wesentlich geringer als der seitliche Abstand der Längsträger vom Königszapfen, vorzugsweise um wenigstens 50 % geringer. Vorzugsweise sind zwei Querträger in Längsrichtung beabstandet, welche dem Königszapfen zwischen sich einschließen und insbesondere mit einer dem Königszapfen tragenden Platte eine Tragkonstruktion bilden. Untergurte von Längsträgern, Querträgern und eine nach unten weisende Plattenfläche der Trägeranordnung bilden vorteilhafterweise eine im wesentlichen durchgehende ebene Fläche. Er kann auch eine im wesentlichen geschlossene untere Fläche in Form eines Blechs oder einer Platte vorgesehen sein, welche auch unter den Untergurten von Längsträgern und/oder Querträgern verläuft und die Gegenfläche zur Gleitfläche bildet, dabei aber für die Kraftübertragung zwischen Sattelkupplungsplatte und Längsträgern und/oder Querträgern nur die Funktion einer dünnen Zwischenlage ohne eigene tragende Funktion einnimmt. Bevorzugt ist eine Ausführung, bei welcher die Untergurte durch die den Königszapfen tragende Tragplatte selbst gebildet sind. Im Fahrbetrieb mit geringen Knickwinkeln werden die vertikalen Kräfte im wesentlichen ausschließlich zwischen den Längsträgern und den von diesen überdeckten Teilflächen der Gleitfläche der Tragplatte übertragen. Die zwischen den Längsträgern befindliche Tragkonstruktion für den Königszapfen überträgt in erster Linie horizontale Querkräfte und kann hierfür gegenüber der Sattelplatte konventioneller Kupplungsanordnungen relativ leicht ausgeführt sein. Im Rangierbetrieb treten als vertikale Abstützungskräfte im wesentlichen nur statische Belastungen auf, welche wesentlich geringer sind als die dynamischen Spitzenbelastungen im Fahrbetrieb. Bei größeren Knickwinkeln ist daher die Abstützung des Sattels auf der Sattelkupplungsplatte über die Tragkonstruktion insbesondere über den bzw. die schwächeren Querträger ausreichend. Die Querträger im Frontbereich können auch in der Stellung des Straßenfahrbetriebs mit geringen Knickwinkeln über der Gleitfläche verlaufen. Der Hauptteil der vertikalen Kräfte wird dabei aber vorteilhaft unmittelbar von der Sattelkupplungsplatte in die Längsträger bzw. umgekehrt geleitet.

Der Abstand der Längsträger im Frontbereich (als Abstand ihrer vertikalen Stege) ist an der Längsposition des Königszapfens vorteilhafterweise geringer als 95 %, insbesondere geringer als 90 % des maximalen Durchmessers der Gleitfläche der zugfahrzeugseitigen Tragplatte. Der Abstand der Längsträger beträgt an der Längsposition des Königszapfens vorteilhafterweise wenigstens 70 % des maximalen Durchmessers der Gleitfläche der zugfahrzeugseitigen Tragplatte. Der Abstand der Längsträger an der Längsposition des Königszapfens liegt gemäß einer vorteilhaften Ausführung bei wenigstens 780 mm, insbesondere wenigstens 800 mm und maximal 1000 mm, insbesondere maximal 825 mm.

In vorteilhafter Ausführung weisen die Außenkanten der Untergurte der Längsträger eine geringe Überdeckung gegenüber dem maximalen Durchmesser der Gleitfläche auf, wodurch sich beim Fahrbetrieb seitlich herausgedrängtes Schmierfett als Wulst unterhalb des überstehenden Untergurts sammelt und weitgehend vor Verschmutzung geschützt ist und daher wieder verwandt und nach dem Absatteln wieder auf die Sattelkupplungsplatte aufgebracht werden kann. Der Überstand der Außenkante der Untergurte der Längsträger über den größten Durchmesser der Gleitfläche beträgt vorteilhafterweise wenigstens 5 mm, vorzugsweise wenigstens 15 mm.

Insbesondere bei der bevorzugten Ausführungsform als Kippsattelanhänger mit einer heckseitigen Kippachse und einer im Frontbereich abgestützten hydraulischen oder pneumatischen Hubpresse zum Anheben und Kippen einer Kippmulde um die Kippachse ist der gegenüber konventionellen Kippsattelanhängeranordnungen verringerte Abstand im Frontbereich vorteilhaft für die Anordnung und Abstützung des Pressenlagers der Hubpresse. Das Pressenlager kann vorteilhafterweise in Längsrichtung zwischen einem ersten Querträger, welcher innerhalb des Drehkreises der zugfahrzeugseitigen Tragplatte, insbesondere über der Gleitfläche in geringem Abstand vor dem Königszapfen liegt, und einem weiteren, die vorderen Enden der Längsträger verbindenden, vorzugsweise außerhalb des Drehkreises der Tragplatte liegenden Querträger angeordnet sein und die Pressenkräfte über diese beiden Querträger in die Längsträger einleiten. Das Pressenlager kann aber auch weiter von dem Königszapfen beabstandet und dann über zwei von der Tragkonstruktion des Königszapfens unabhängige Querträger mit den Längsträgern verbunden sein.

Der Abstand der Längsträger im Frontbereich ist vorteilhafterweise um wenigstens 20 %, insbesondere wenigstens 30 % geringer als deren Abstand im Heckbereich. Die Längsträgerabschnitte im Frontbereich sind vorzugsweise parallel zur Längsrichtung des Anhängers. In anderer Ausführung können die Längsträgerabschnitte in Fahrtrichtung vor dem Heckbereich auch unter kontinuierlicher Verringerung des Längsträgerabstands in Fahrtrichtung aufeinander zu laufen. Als Frontbereich sei dann der Abschnitt ab den Querträgern für die Tragkonstruktion des Königszapfens angesehen.

Zwischen Frontbereich und Heckbereich verlaufen Übergangsabschnitte der Längsträger schräg zur Längsrichtung. Insbesondere bei dem bevorzugten, zur Längsrichtung parallelen Verlauf der Längsträger im Heckbereich und/oder im Frontbereich weicht die Längsträgerform von dem bei Kippsattelanhängern typischen und an sich zur Kraftübertragung optimal erscheinenden geraden Verlauf ab, gewinnt dadurch aber überraschenderweise die beschriebenen besonderen Vorteile im Frontbereich.

Vorteilhafterweise sind Querträger zwischen den Längsträgern in Heckbereich und/oder Frontbereich mit zur Längsrichtung parallelem Verlauf der Längsträger dicht bei den Ansätzen zu den schräg verlaufenden Übergangsabschnitten vorgesehen.

Die maximale Höhe der Längsträger im Frontbereich ist vorteilhafterweise geringer, insbesondere um wenigstens 30 % geringer als die maximale Längsträgerhöhe im Heckbereich. Die Verringerung der Längsträgerhöhe vom Heckbereich zum Frontbereich erfolgt durch ansteigenden Verlauf des Untergurts bei zumindest annähernd in einer horizontalen Ebene verlaufendem Obergurt. Vorteilhafterweise erfolgt der überwiegende Teil, vorzugsweise wenigstens 70 % des Anstiegs des Untergurts in dem Verbindungsbereich mit den gegen die Längsachse schräg verlaufenden Verbindungsabschnitten der Längsträger und somit gemeinsam mit der Verringerung des Längsträgerabstands, insbesondere bei 3-achsigen Anhängern, oder, insbesondere bei 2-achsigen Anhängern, im Heckbereich vor der vordersten Radachse bzw. deren Abstützung an den Längsträgern oder verteilt auf den Heckbereich und die Übergangsabschnitte.

Die Querträger im Frontbereich und/oder im Heckbereich sind vorteilhafterweise mit den Längsträgern, gegebenenfalls unter Einfügen von Verbindungselementen, wie Knotenblechen etc., durch Fügeelemente, wie Niete, Bolzen, Schrauben etc. verbunden, können aber auch verschweißt sein.

Die Erfindung ist nachfolgend unter Bezugnahme auf die Abbildungen noch eingehend veranschaulicht. Dabei zeigt:
- Fig. 1: eine Seitenansicht eines Fahrgestellrahmens eines Kippsattelanhängers,
- Fig. 2: den Fahrgestellrahmen nach Fig. 1 in Draufsicht,
- Fig. 3: einen vergrößerten Ausschnitt des Frontbereichs aus Fig. 2.
- Fig. 4: Einzelteile eines bevorzugten Chassis-Vorderteils,
- Fig. 5: einen Schnitt durch ein Chassis-Vorderteil mit den Einzelteilen nach Fig. 4.

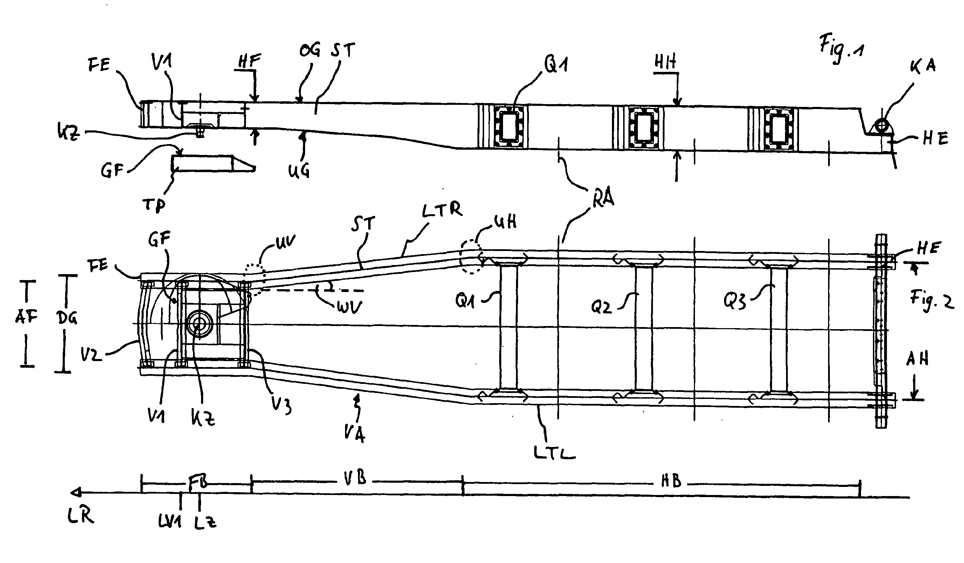

Der in Fig. 1 in Seitenansicht und in Fig. 2 in Draufsicht skizzierte Fahrgestellrahmen eines Kippsattelanhängers besteht in an sich gebräuchlicher Weise aus zwei in Längsrichtung einstückig durchgehenden Haupt-Längsträgern LTL und LTR mit, auf die in Fahrtrichtung zeigende Längsrichtung LR des Chassis bezogen, heckseitigen Enden HE und frontseitigen Enden FE. Die Längsträger sind über eine Mehrzahl von Querträgern verbunden und dienen in einem Heckbereich HB zur Abstützung für nicht eingezeichnete Achsaggregate, von denen mit RA die ungefähren Achspositionen eingezeichnet sind, und in einem Frontbereich FB als Trägers eines anhängerseitigen Teils einer Sattelkupplungsanordnung mit dem in eine zugfahrzeugseitige Tragplatte TP eingreifenden Königszapfen als zentralem Bauteil. An den heckseitigen Enden der Längsträger ist eine quer zur Längsrichtung liegende horizontale Kippachse KA befestigt, um welche eine nicht eingezeichnete auf dem Fahrgestell montierte Kippmulde unter der Einwirkung einer im Frontbereich abgestützten Hubpresse kippbar ist.

Die Längsträger sind als Schweißkonstruktionen mit jeweils einem Obergurt OG, einem Untergurt UG und einem vertikalen Steg ST ausgeführt und zeigen zumindest in ihrem überwiegenden Längsverlauf im Querschnitt eine Doppel-T-Form. Die Stege liegen quer zur Längsrichtung typischerweise annähernd in der Mitte der Breiten von Obergurt bzw. Untergurt, können aber auch aus dieser Mittenlage versetzt sein. Insbesondere in Knotenbereichen, vor allem zur Verbindung mit den Querträgern QT1, QT2, QT3 im Heckbereich können Abweichungen von der Doppel-T-Form bzw. der vertikalen Stegform vorliegen. Die Höhe der Stege ST und damit auch der Längsträger ist im Heckbereich HB größer als im Frontbereich FB, in Frontbereich und Heckbereich aber jeweils im wesentlichen konstant. Die Obergurte OG liegen vorteilhafterweise über den gesamten Längsverlauf in einer gemeinsamen Ebene.

Der seitliche Abstand der Längsträger LTR, LTL senkrecht zur Längsrichtung LR im Heckbereich HB ist mit AH und im Frontbereich FB, insbesondere in der Längsposition LZ des Königszapfens KZ, mit AF bezeichnet, wobei AF kleiner als AH und vorzugsweise AF um wenigstens 20 %, insbesondere wenigstens 35 % kleiner ist als AH, also AF<0,8 AH bzw. AF<0,65 AH. Der Übergang der Längsträger von dem breiteren Heckbereich HB zu dem schmaleren Frontbereich erfolgt in einem Verbindungsbereich VB über in sich im wesentlichen gerade, gegen die Längsrichtung schräg gestellte Verbindungsabschnitte VA der Längsträger. Der Anstellwinkel WV der Verbindungsabschnitte VA gegen die Längsrichtung beträgt vorteilhafterweise weniger als 15°. Der Anstellwinkel WV beträgt vorteilhafterweise wenigstens 10°.

Die Längsträger weisen im Heckbereich HB eine über einen alle Querträger Q1 bis Q3 und Achsanbindungen umfassenden Abschnitt eine maximale, im wesentlichen konstante Höhe HH, im Bereich des Königszapfens eine demgegenüber geringere maximale, im wesentlichen konstante Höhe HF auf, welche vorzugsweise um wenigstens 30 % geringer ist als HH. Die Verringerung der Höhe der Längsträger erfolgt zumindest überwiegend, im skizzierten Beispiel vollständig im Verlauf der schräg ausgerichteten Verbindungsabschnitte VA. In anderer vorteilhafter Ausführung, insbesondere bei nur 2-achsigen Anhängern mit typischerweise größerer maximaler Höhe HH kann die überwiegende Verringerung der Höhe der Längsträger auch noch im Heckbereich vor der vordersten Achse bzw. deren Abstützung an den Längsträgern erfolgen. Die überwiegende Verringerung der Höhe der Längsträger kann in anderer vorteilhafter Ausführung auch auf den vorderen Heckbereich und auf den Verbindungsbereich verteilt sein.

An den Übergängen UH der Verbindungsabschnitte VA in den Heckbereich und/oder den Übergängen UV in den Frontbereich sind mit geringem Längsabstand, vorzugsweise weniger als 25 % des jeweiligen Längsträgerabstands AH bzw. AF, Querträger QT1 bzw. V3 vorgesehen, welche vorzugsweise im Heckbereich bzw. im Frontbereich und damit in Bereichen mit parallelem Verlauf der Längsträger LTR, LTL liegen.

Der Heckbereich nimmt in Längsrichtung vorteilhafterweise wenigstens 40 % der Gesamtlänge des Chassis ein. Die Erstreckung des Frontbereichs in Längsrichtung beträgt vorteilhafterweise weniger als das 2,5-fache des Längsträgerabstands AF in der Längsposition LZ des Königszapfens.

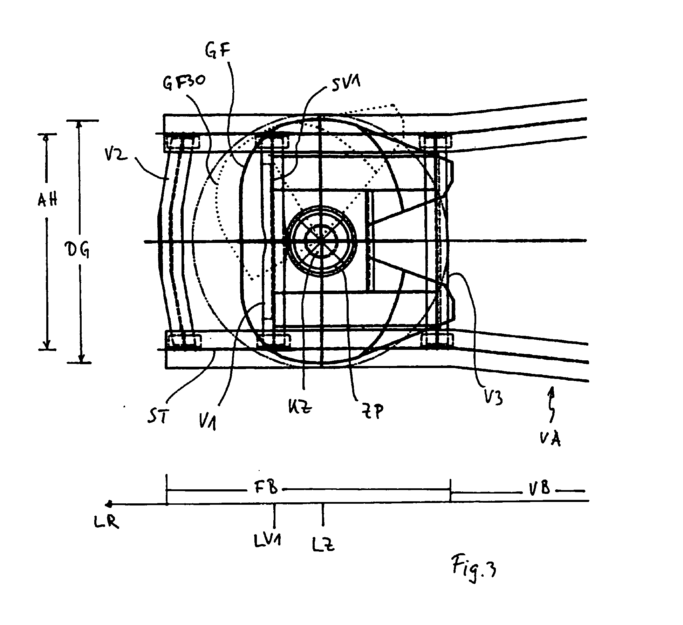

Aus der vergrößerten Darstellung des Frontbereichs FB in Fig. 3 sind vorteilhafte Einzelheiten entnehmbar. Dabei sind die Umrisse der zugfahrzeugseitigen Sattelkupplungsplatte TP mit der ebenen Gleitfläche GF in unterbrochener Linie mit eingezeichnet.

Die Sattelkupplungsplatte TP zeigt eine gebräuchliche Form mit einer nicht kreisförmigen ebenen Gleitfläche GF, deren größter Durchmesser DG in Geradeausfahrstellung in der Längsposition LZ des Königszapfens KZ senkrecht zur Längsrichtung liegt. Der größte Durchmesser DG der Gleitfläche kann bei in Querrichtung vollständig ebener Sattelkupplungsplatte auch gleich der Querabmessung der Sattelkupplungsplatte sein. Die Stege ST der Längsträger verlaufen in Längsrichtungsposition LZ über der Gleitfläche GF. Die Untergurte der Längsträger liegen mit den schraffierten Flächen als Gegenflächen auf der Gleitfläche auf. Der seitliche Abstand AH der Längsträger ist auf den Durchmesser DG der Gleitfläche so abgestimmt, dass AH maximal 95 %, insbesondere AH maximal 90 % des größten Gleitflächendurchmessers DG beträgt. Andererseits beträgt AG vorteilhafterweise wenigstens 70 % von DG, insbesondere wenigstens 80 % von DG, wodurch vorteilhaft eine breite Basis der Abstützung des Chassis über die Längsträger auf der Sattelkupplungsplatte TP gewährleistet ist. Dies ist auch in einer Position gegeben, in welcher der die Längsrichtung des Zugfahrzeugs um ca. 30° gegen die Längsrichtung LR des Anhängers um den Königszapfen verschwenkt ist.

Ein erster an beiden Längsträgern befestigter Querträger V1 im Frontbereich liegt in geringem Abstand vor dem Königszapfen KZ mit einem vertikalen Steg SV1 an einer Längsposition LV1. Der Abstand LV1-LZ in Längsrichtung beträgt vorteilhafterweise weniger als 30 %, insbesondere weniger als 25 % des größten Durchmessers DG der Gleitfläche GF.

Ein weiterer Querträger V2 verbindet die Enden der Längsträger miteinander. Eine Hubpresse zum vorderen Anheben einer um die hintere Kippachse KA kippbar gelagerten Kippmulde ist, insbesondere bei 3-achsigen Kippsattelanhängern, vorteilhafterweise im Bereich zwischen den Querträgern V1 und V2 angeordnet und über diese auf den Längsträgern abgestützt. In anderer Ausführung, insbesondere bei 2-achsigen Kippsattelanhängern kann der Königszpafen weiter vom frontseitigen Ende FE beabstandet und die Hubpresse über zwei von der Tragkonstruktion des Königszapfens unabhängige Querträger mit den Längsträgern verbunden sein.

Eine in gebräuchlicher Weise den Königszapfen tragende Zapfenplatte ZP, deren Durchmesser klein ist gegen den Abstand AF der Längsträger ist an einer Tragkonstruktion aus Querträgern V1, V3 und weiteren Elementen, vorzugsweise mehreren unterschiedlich ausgerichteten gekanteten Blechen befestigt. Die Tragkonstruktion ist über die beiden Querträger V1 und V3 an den Längsträgern befestigt. Über den Königszapfen und die Tragkonstruktion werden im wesentlichen nur Querkräfte übertragen und der Frontbereichs des Chassis gegen abhebende Kräfte gehalten.

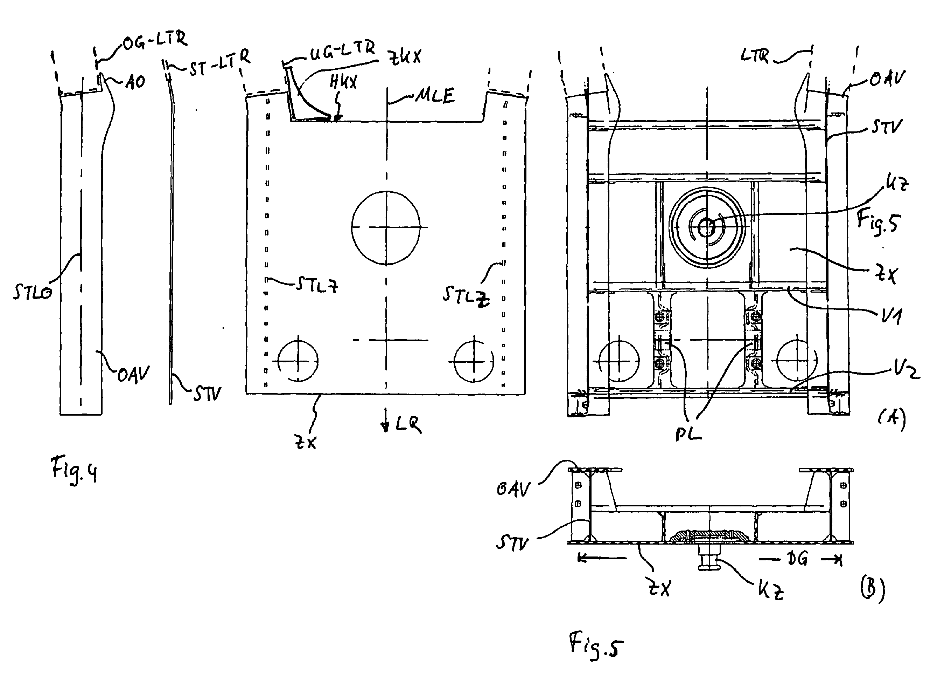

Fig. 4 zeigt einige wesentliche Einzelteile eines Chassis-Vorderteils einer bevorzugten Ausführungsform der Erfindung, bei welcher eine den Königszapfen tragende Tragplatte seitlich bis unter die Vertikalstege der Längsträger reicht und dort die Funktion der Untergurte der Längsträger übernimmt und mit den Unterkanten der Vertikalstege verschweißt ist.

Als wesentliche Einzelteile sind in Fig. 4 in Draufsicht ein Obergurt-Abschnitt OAV, ein Vertikalsteg-Abschnitt STV und eine Tragplatte ZX dargestellt. Die Tragplatte ZX ist im wesentlichen symmetrisch zur vertikalen Mittellängsebene MLE des Chassis. Auch die paarweise vorhandenen Obergurt-Abschnitte OAV und Vertikalstege STV liegen symmetrisch zur Mittellängsebene MLE. Obergurt-Abschnitte OAV und Vertikalsteg-Abschnitte STV sind in Längsrichtung LR im wesentlichen auf die Länge der Tragplatte ZX beschränkt, so dass das Chassis-Vorderteil als im wesentlichen auf die Länge der Zapfenplatte begrenztes eigenständiges Modul als Schweißkonstruktion vorgefertigt werden kann. Das vorgefertigte Modul ist in Fig. 5 dargestellt. Ein solches Modul wird mit den nach hinten führenden und in Fig. 4 und Fig. 5 mit unterbrochener Linie angedeuteten Längsträgerabschnitten LTR des trapezförmigen Verbindungsbereichs VB (Fig. 2), bestehend aus Obergurt OG-LTR, Untergurt UG-LTR und Vertikalsteg ST-LTR, verschweißt. Die Schweißverbindung kann gegen die Hinterkante HKX der Tragplatte, welche im skizzierten bevorzugten Beispiel in Längsrichtung LR annähernd bei der den Übergängen UV (Fig. 2) des trapezförmig verjüngten Verlaufs der Vertikalstege in den Parallelverlauf des Vorderteils liegt, nach hinten um ein geringes Maß, welches vorzugsweise in der Größenordnung der Gurtbreiten oder darunter liegt, versetzt sein, um die Kraftüberleitung günstig zu gestalten. Aus Gründen der Kraftüberleitung zwischen Vorderteil und Verbindungsbereich VB können weitere Details, wie eine Erweiterung AO am Obergurtabschnitt OAV, ein die Tragplatte ZX und den Untergurt UG-LTR verbindendes Knotenblech ZKX oder schräge Verläufe von Schweißlinien vorgesehen sein. Durch die Versetzung der Schweißverbindung um das genannte geringe Maß nach hinten weist der Vertikalstegabschnitt STV am hinteren Ende einen leichten Knick auf.

An Obergurtabschnitt OAV und an der Tragplatte ZX in Fig. 4 sind Steglinien STLO, STLZ eingezeichnet, welche den Verlauf des Vertikalstegabschnitts STV im fertigen Vorderteil darstellen. Die Steglinie STLZ verdeutlicht, dass die Tragplatte in Querrichtung durchgehend seitlich bis unter die Vertikalstegabschnitte und nach Art der Untergurte über die Vertikalstegabschnitte hinaus reicht.

Im in Fig. 5 (A) in Draufsicht skizzierten Beispiel eines zusammengefügten Chassis-Vorderteil sind zwischen zwei Querträgern V1, V2 in Längsrichtung vor dem Königszapfen KZ noch zwei Lagerschalen PL für ein Pressenlager einer Hydraulikpresse eines Sattelkippers eingezeichnet. Die Tragplatte reicht nach vorne im wesentlichen bis zu den vorderen Enden der Vertikalstegabschnitte und der Obergurtabschnitte. Bei längeren Chassis-Vorderteilen können auch weitere Untergurt-Abschnitte nach vorne an die Tragplatte anschließend vorgesehen sein.

Aus der geschnittenen Frontansicht entlang x-x in Fig. 5 (B) ist das Merkmal der die Untergurte unter den Vertikalstegabschnitten STV ersetzenden Außenbereiche der unter den Vertikalstegabschnitten STV über diese seitlich hinausragenden Tragplatte ZX anschaulich ersichtlich. Die Tragplatte ragt vorzugsweise auch um ein geringes Maß, vorteilhafterweise wenigstens 5 mm, insbesondere wenigstens 15 mm über den größten Durchmesser der Gleitfläche der Sattelkupplungsplatte hinaus.

In besonders vorteilhafter Ausführung ist der seitliche Abstand der Vertikalstegabschnitte im Bereich des Königszapfens wieder, wie zu Fig. 1 bis Fig. 3 beschrieben, um ein geringes Maß kleiner als der Querdurchmesser DG der Gleitfläche der zugfahrzeugseitigen Sattelkupplungsplatte, so dass wieder eine Überleitung vertikaler Kräfte zwischen Sattelkupplungsplatte und Vorderteil des Chassis direkt vertikal in die Vertikalstegabschnitte erfolgt, ohne Biegebeanspruchung der Tragplatte oder des Erfordernisses besonderer QuerAussteifungen zur Stabilisierung der Tragplatte.

## Patentansprüche

1. Sattelanhängeranordnung, insbesondere Kippsattelanhängeranordnung, mit einem Fahrwerk im Heckbereich und einer Sattelkupplung im Frontbereich und zwischen Heckbereich und Frontbereich durchgehenden Haupt-Längsträgern (LTL, LTR) eines Anhängerchassis, welche jeweils einen in einer Ebene durchgehenden Obergurt (OG), einen Untergurt (UG) und einen vertikalen Steg (ST) enthalten, wobei die Sattelkupplung auf Anhängerseite im Frontbereich des Anhängerchassis einen Königszapfen (KZ) und von diesem radial beabstandet eine zur Übertragung vertikaler Abstützungskräfte gegen eine ebene Gleitfläche (GF) einer zugfahrzeugseitigen sattelkupplungsplatte (TP) der sattelkupplung dienende ebene Gegenfläche umfasst, und wobei gegenseitige seitliche Abstand der Stege (ST) der Längsträger im Frontbereich (FB) der Sattelkupplung geringer ist als im Heckbereich (HB), **dadurch gekennzeichnet dass** im Fahrbetrieb die Stege (ST) der Längsträger über die Gleitfläche (GF) führen und beide Längsträger mit ihren Untergurten auf der Gleitfläche aufliegen und/oder dass eine anhängerseitige, den Königszapfen tragende Tragplatte (ZX) einstückig beidseitig bis unter die Vertikalstege (ST) der Längsträger reicht und dort die Untergurte (UG) ersetzt und mit den Vertikalstegen verschweißt ist.

2. Anordnung nach Anspruch 1, **dadurch gekennzeichnet, dass** im Fahrbetrieb mit Knickwinkeln <30° die vertikalen Abstützkräfte zumindest überwiegend unmittelbar zwischen Gleitfläche (GF) der Sattelkupplungsplatte (TP) und auf dieser aufliegenden Längsträgern (LTL, LTR) übertragen werden.

3. Anordnung nach Anspruch 1 oder 2, **dadurch gekennzeichnet, dass** der Längsträgerabstand im Frontbereich (FB) um wenigstens 20 %, insbesondere wenigstens 30 % geringer ist als der Längsträgerabstand im Heckbereich (HB).

4. Anordnung nach einem der Ansprüche 1 bis 3, **dadurch gekennzeichnet, dass** der Abstand der Stege der Längsträger im Frontbereich (FB) geringer ist als 95 %, insbesondere geringer als 90 % des größten Durchmesser (DG) der Gleitfläche (GF) der Sattelkupplungsplatte um den Sattelzuggelenkzapfen.

5. Anordnung nach Anspruch 4, **dadurch gekennzeichnet, dass** der Abstand der Stege (ST) der Längsträger größer ist als 70 % der Querabmessung der Gleitfläche (GF) der Sattelkupplungsplatte.

6. Anordnung nach einem der Ansprüche 1 bis 5, **dadurch gekennzeichnet, dass** der Abstand der Stege (ST) der Längsträger an der Längsposition des Königszapfens (KZ) wenigstens 780 mm, vorzugsweise wenigstens 800 mm beträgt.

7. Anordnung nach einem der Ansprüche 1 bis 6, **dadurch gekennzeichnet, dass** der Abstand der Stege (ST) der Längsträger an der Längsposition (LZ) des Königszapfens maximal 1000 mm, vorzugsweise maximal 825 mm beträgt.

8. Anordnung nach einem der Ansprüche 1 bis 7, **dadurch gekennzeichnet, dass** die maximale Höhe (HF) der Längsträger im Frontbereich (FB) geringer ist als deren maximale Höhe (HH) im Heckbereich (HB).

9. Anordnung nach Anspruch 8, **dadurch gekennzeichnet, dass** die Höhe der Längsträger im Frontbereich (FB) um wenigstens 30 % geringer ist als im Heckbereich (HB).

10. Anordnung nach Anspruch 8 oder 9, **dadurch gekennzeichnet, dass** die Verringerung der Höhe der Längsträger (LTL, LTR) zumindest überwiegend, vorzugsweise zu mindestens 70 % im Bereich der Übergangsabschnitte und/oder im Heckbereich vor der vordersten Radachse erfolgt.

11. Anordnung nach einem der Ansprüche 1 bis 10, **dadurch gekennzeichnet, dass** im Frontbereich ein erster Querträger (V1) in Längsrichtung vor dem Sattelzugzapfen liegt, welcher in der Vertikalprojektion die Gleittläche (GF) schneidet.

12. Anordnung nach Anspruch 11, **dadurch gekennzeichnet, dass** zwischen dem ersten Querträger (V1) und einem weiteren, die vorderen Enden der Längsträger verbindenden Querträger (V2) ein Lager für eine Kippmulden-Hubpresse angeordnet ist.

13. Anordnung nach Anspruch 11 oder 12, **dadurch gekennzeichnet, dass** der erste (V1) und/oder der weitere Querträger (V2) mit den Längsträgern über Fügeelemente verbunden sind.

14. Anordnung nach einem der Ansprüche 1 bis 13, **dadurch gekennzeichnet, dass** die unter die Vertikalstege reichende Tragplatte (ZX) an hinten liegenden Kanten mit Untergurten von nach hinten führenden Längsträgerabschnitten verschweißt ist.

15. Anordnung nach einem der Ansprüche 1 bis 14, **dadurch gekennzeichnet, dass** die unter die Vertikalstege der Längsträger reichende Tragplatte (ZX) mit vorderen Obergurtabschnitten (OAV) und mit vorderen Vertikalstegabschnitten (STV) ein Schweißkonstruktionsmodul bildet, welches seinerseits an beidseitigen hinteren Enden mit Obergurten, Vertikalstegen und Untergurten von weiter nach hinten führenden Längsträgerabschnitten verschweißt ist.

16. Anordnung nach einem der Ansprüche 1 bis 15, **dadurch gekennzeichnet, dass** die seitlichen Außenkanten der unterhalb der Vertikalstege verlaufenden Tragplatte (ZX) außerhalb der Gleitfläche (GF) der Sattelkupplungsplatte liegen.

## Claims

1. Semi-trailer arrangement, especially a tipping semi-trailer arrangement, with an undercarriage in the rear region and a fifth-wheel coupling in the front region and main longitudinal members (LTL, LTR) of a trailer chassis, which longitudinal members are continuous between rear region and front region and in each case contain an upper boom (OG), which is continuous in one plane, a lower boom (UG) and a vertical web (ST), the fifth-wheel coupling comprising a king pin (KZ) on the trailer side in the front region of the trailer chassis and, spaced apart radially from this king pin, a planar mating surface, which is used for transmitting vertical supporting forces against a planar sliding surface (GF) of a fifth-wheel coupling plate (TP) of the fifth-wheel coupling, which fifth-wheel coupling plate is on the towing-vehicle side, and the mutual lateral distance between the webs (ST) of the longitudinal members being smaller in the front region (FB) of the fifth-wheel coupling then in the rear region (HB), **characterized in that**, during the driving mode, the webs (ST) of the longitudinal members are guided over the sliding surface (GF) and both longitudinal members rest with their lower booms on the sliding surface, and/or **in that** a supporting plate (ZX), which is on the trailer side and supports the king pin, extends as a single piece on both sides under the vertical webs (ST) of the longitudinal members where it replaces the lower booms (UG) and is welded to the vertical webs.

2. Arrangement according to Claim 1, **characterized in that**, in the driving mode with buckling angles <30°, the vertical supporting forces are transmitted at least predominantly directly between sliding surface (GF) of the fifth-wheel coupling plate (TP) and longitudinal members (LTL, LTR) resting on the said sliding surface.

3. Arrangement according to Claim 1 or 2, **characterized in that** the distance between the longitudinal members in the front region (FB) is at least 20%, in particular at least 30%, smaller than the distance between the longitudinal members in the rear region (HB).

4. Arrangement according to one of Claims 1 to 3, **characterized in that** the distance between the webs of the longitudinal members in the front region (FB) is smaller than 95%, in particular smaller than 90%, of the maximum diameter (DG) of the sliding surface (GF) of the fifth-wheel coupling plate about the link pin of the articulated lorry.

5. Arrangement according to Claim 4, **characterized in that** the distance between the webs (ST) of the longitudinal members is greater than 70% of the transverse dimension of the sliding surface (GF) of the fifth-wheel coupling plate.

6. Arrangement according to one of Claims 1 to 5, **characterized in that** the distance between the webs (ST) of the longitudinal members is at least 780 mm, preferably at least 800 mm, at the longitudinal position of the king pin (KZ).

7. Arrangement according to one of Claims 1 to 6, **characterized in that** the distance between the webs (ST) of the longitudinal members is at maximum 1000 mm, preferably at maximum 825 mm, at the longitudinal position (LZ) of the king pin.

8. Arrangement according to one of Claims 1 to 7, **characterized in that** the maximum height (HF) of the longitudinal members in the front region (FB) is smaller than their maximum height (HH) in the rear region (HB).

9. Arrangement according to Claim 8, **characterized in that** the height of the longitudinal members in the front region (FB) is at least 30% smaller than in the rear region (HB).

10. Arrangement according to Claim 8 or 9, **characterized in that** the reduction in the height of the longitudinal members (LTL, LTR) takes place at least predominantly, preferably up to at least 70%, in the region of the transition sections and/or in the rear region in front of the frontmost wheel axle.

11. Arrangement according to one of Claims 1 to 10, **characterized in that** in the front region a first crossmember (V1) is situated in the longitudinal direction in front of the pin of the articulated lorry, which pin intersects the sliding surface (GF) in the vertical projection.

12. Arrangement according to Claim 11, **characterized in that** a bearing for a dump-body lifting press is arranged between the first crossmember (V1) and a further crossmember (V2) connecting the front ends of the longitudinal members.

13. Arrangement according to Claim 11 or 12, **characterized in that** the first crossmember (V1) and/or the further crossmember (V2) are connected to the longitudinal members via joining elements.

14. Arrangement according to one of Claims 1 to 13, **characterized in that** the supporting plate (ZX) extending under the vertical webs is welded at edges situated at the rear to lower booms of longitudinal-member sections leading rearwards.

15. Arrangement according to one of Claims 1 to 14, **characterized in that** the supporting plate (ZX) extending under the vertical webs of the longitudinal members forms together with front upper-boom sections (OAV) and with front vertical-web sections (STV) a welding construction module which, for its part, is welded at rear ends on both sides to upper booms, vertical webs and lower booms of longitudinal-member sections leading further rearwards.

16. Arrangement according to one of Claims 1 to 15, **characterized in that** the lateral outer edges of the supporting plate (ZX) extending under the vertical webs are situated outside the sliding surface (GF) of the fifth-wheel coupling plate.

## Revendications

1. Ensemble semi-remorque, en particulier ensemble semi-remorque basculante, comprenant un châssis dans la partie arrière et une sellette d'attelage dans la partie avant et des supports longitudinaux principaux (LTL, LTR) d'un châssis de remorque continus entre la partie arrière et la partie avant, qui contiennent chacun une membrure supérieure (OG) continue dans un plan, une membrure inférieure (UG) et une nervure verticale (ST), la sellette d'attelage comprenant, du côté de la remorque, dans la partie avant du châssis de remorque, une fusée (KZ) et, espacé radialement de celle-ci, une contre-surface plane servant au transfert de forces de support verticales contre une surface de glissement plane (GF) d'une plaque de sellette d'attelage (TP) de la sellette d'attelage du côté du véhicule tracteur, et où la distance latérale mutuelle des nervures (ST) des supports longitudinaux dans la partie avant (FB) de la sellette d'attelage est inférieure à la distance dans la partie arrière (HB), **caractérisé en ce qu'**en mode de conduite, les nervures (ST) des supports longitudinaux s'étendent sur la surface de glissement (GF) et les deux supports longitudinaux avec leurs membrures inférieures reposent sur la surface de glissement et/ou **en ce qu'**une plaque de support (ZX) portant les fusées, du côté de la remorque, s'étend d'une seule pièce de part et d'autre jusqu'en dessous des nervures verticales (ST) des supports longitudinaux, et y remplace les membrures inférieures (UG) et est soudée aux nervures verticales.

2. Ensemble selon la revendication 1, **caractérisé en ce qu'**en mode de conduite, avec des angles de flexion < 30°, les forces de support verticales sont transmises au moins essentiellement directement entre la surface de glissement (GF) de la plaque de la sellette d'attelage (TP) et les supports longitudinaux (LTL, LTR) reposant sur celle-ci.

3. Ensemble selon la revendication 1 ou 2, **caractérisé en ce que** la distance entre les supports longitudinaux dans la partie avant (FB) est inférieure d'au moins 20%, notamment d'au moins 30%, à la distance entre les supports longitudinaux dans la partie arrière (HB).

4. Ensemble selon l'une quelconque des revendications 1 à 3, **caractérisé en ce que** la distance des nervures des supports longitudinaux dans la partie avant (FB) est inférieure à 95%, notamment inférieure à 90%, du diamètre maximum (DG) de la surface de glissement (GF) de la plaque de la sellette d'attelage autour des tourillons d'articulation de traction de la sellette.

5. Ensemble selon la revendication 4, **caractérisé en ce que** la distance des nervures (ST) des supports longitudinaux est supérieure à 70% de la dimension transversale de la surface de glissement (GF) de la plaque de la sellette d'attelage.

6. Ensemble selon l'une quelconque des revendications 1 à 5, **caractérisé en ce que** la distance des nervures (ST) des supports longitudinaux à la position longitudinale de la fusée (KZ) vaut au moins 780 mm, de préférence au moins 800 mm.

7. Ensemble selon l'une quelconque des revendications 1 à 6, **caractérisé en ce que** la distance des nervures (ST) des supports longitudinaux à la position longitudinale (LZ) de la fusée vaut au maximum 1000 mm, de préférence au maximum 825 mm.

8. Ensemble selon l'une quelconque des revendications 1 à 7, **caractérisé en ce que** la hauteur maximale (HF) des supports longitudinaux dans la partie avant (FB) est inférieure à leur hauteur maximale (HH) dans la partie arrière (HB).

9. Ensemble selon la revendication 8, **caractérisé en ce que** la hauteur des supports longitudinaux dans la partie avant (FB) est inférieure d'au moins 30% à la hauteur dans la partie arrière (HB).

10. Ensemble selon la revendication 8 ou 9, **caractérisé en ce que** la réduction de la hauteur des supports longitudinaux (LTL, LTR) s'effectue au moins essentiellement, de préférence à raison d'au moins 70% dans la partie des portions de transition et/ou dans la partie arrière avant l'essieu le plus avant des roues.

11. Ensemble selon l'une quelconque des revendications 1 à 10, **caractérisé en ce que** dans la partie avant, un premier support transversal (V1) se trouve dans la direction longitudinale avant le tourillon de traction de la sellette, qui coupe la surface de glissement (GF) dans la projection verticale.

12. Ensemble selon la revendication 11, **caractérisé en ce qu'**entre le premier support transversal (V1) et un autre support transversal (V2) reliant les extrémités avant des supports longitudinaux, est disposé un palier pour une presse de levage de benne basculante.

13. Ensemble selon la revendication 11 ou 12, **caractérisé en ce que** le premier support transversal (V1) et/ou l'autre support transversal (V2) sont connectés aux supports longitudinaux par le biais d'éléments de joint.

14. Ensemble selon l'une quelconque des revendications 1 à 13, **caractérisé en ce que** la plaque de support (ZX) s'étendant sous les nervures verticales est soudée au niveau d'arêtes situées en arrière à des membrures inférieures de sections de supports longitudinaux s'étendant vers l'arrière.

15. Ensemble selon l'une quelconque des revendications 1 à 14, **caractérisé en ce que** la plaque de support (ZX) s'étendant sous les nervures verticales des supports longitudinaux forme avec des sections de membrure supérieure avant (OAV) et des sections de nervures verticales avant (STV) un module de construction soudée qui est pour sa part soudé aux extrémités arrière des deux côtés à des membrures supérieures, des nervures verticales et des membrures inférieures d'autres sections de supports longitudinaux s'étendant vers l'arrière.

16. Ensemble selon l'une quelconque des revendications 1 à 15, **caractérisé en ce que** les arêtes extérieures latérales de la plaque de support (ZX) s'étendant en dessous des nervures verticales se situent à l'extérieur de la surface de glissement (GF) de la plaque de sellette d'attelage.
